# EUROPEAN PATENT APPLICATION

(11) **EP 4 751 938 A1**
(43) Date of publication of application: **03.06.2026**
(21) Application number: 25216170.8
(22) Date of filing: 17.11.2025
(51) Int. Cl.: B60C 11/03, B60C 9/20

(54) **PNEUMATIC TIRE**

(30) Priority: 29.11.2024 JP 2024207905
(71) Applicant: TOYO TIRE CORPORATION, Itami-shi, Hyogo 6640847 (JP)
(72) Inventor: HIRATA, Kana, Hyogo 6640847 (JP)
(74) Representative: Müller-Boré & Partner Patentanwälte PartG mbB

(57) **Abstract**

A pneumatic tire (1) comprising a tread (10) is provided. The tread (10) includes a pair of shoulder main grooves (23,24), and a shoulder land portion (60,70) placed outward of the shoulder main grooves (23,24) in a tire axial direction. The shoulder land portion (60,70) includes a shoulder sub groove (61) extending along a tire circumferential direction and having a width smaller than a width of the shoulder main groove (23,24), and a shoulder slit (62) extending outward from the shoulder sub groove (61) in the tire axial direction.

## Description

### TECHNICAL FIELD

The present invention relates to a pneumatic tire.

### BACKGROUND

Conventionally, a pneumatic tire is known that includes a tread having a pair of shoulder main grooves extending along a tire circumferential direction, and a shoulder land portion placed outward of the shoulder main grooves in a tire axial direction (see, for example, JP2018-131003A). JP2018-131003A discloses the pneumatic tire in which a slit extending inward in the tire axial direction is formed on the shoulder land portion.

### SUMMARY

### TECHNICAL PROBLEM

In recent years, there has been a demand for tires with excellent noise performance. In general, reducing a groove volume of a main groove, a slit or the like provided in a tread can reduce noise during travel. In contrast, when the groove volume is reduced, a snow column shear force to grasp and compact snow is decreased during travel on a snow-covered road surface, and steering stability on the snow-covered road surface (hereinafter referred to as "on-snow performance") is likely to decrease. That is, it is not easy to improve noise performance while ensuring the on-snow performance.

### SOLUTION TO PROBLEM

A pneumatic tire according to an aspect of the present invention is a pneumatic tire comprising a tread, the tread including a pair of shoulder main grooves and a shoulder land portion placed outward of the shoulder main grooves in a tire axial direction, wherein the shoulder land portion includes a shoulder sub groove extending in the tire circumferential direction and having a width smaller than a width of the shoulder main groove, and a shoulder slit extending outward from the shoulder sub groove in the tire axial direction.

### ADVANTAGEOUS EFFECTS OF INVENTION

According to a pneumatic tire that is an aspect of the present invention, noise performance can be improved while ensuring on-snow performance.

### BRIEF DESCRIPTION OF DRAWINGS

Embodiments of the present invention will be described based on the following figures, wherein:
FIG. 1 is a cross-sectional view of a pneumatic tire that is an example of an embodiment;
FIG. 2 is a plan view of a tread of the pneumatic tire that is the example of the embodiment;
FIG. 3 is an enlarged view of a shoulder land portion in the tread of the pneumatic tire that is the example of the embodiment;
FIG. 4 is a cross-sectional view taken along line A-A of FIG. 3; and
FIG. 5 is a view schematically showing the shape of a ground contact surface of the tread of the pneumatic tire that is the example of the embodiment.

### DESCRIPTION OF EMBODIMENTS

Hereinafter, with reference to the drawings, an example of an embodiment of a pneumatic tire according to the present invention will be described in detail. The embodiment described below is merely an example, and the present invention is not limited to the following embodiment. Furthermore, the present invention includes a form comprising respective components of the embodiment described below that are selectively combined.

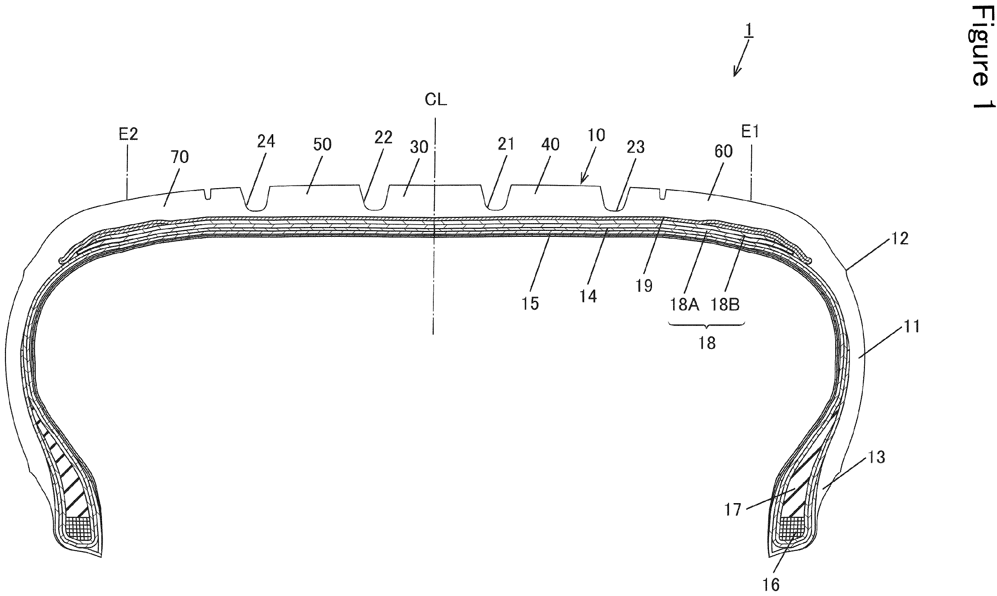

FIG. 1 is a cross-sectional view of a pneumatic tire 1 that is an example of the embodiment. As shown in FIG. 1, the pneumatic tire 1 includes a tread 10 that is a portion in contact with a road surface, a pair of sidewalls 11 arranged on opposite sides of the tread 10, and a pair of beads 13 arranged inward of the sidewalls 11 in a tire radial direction. Furthermore, the pneumatic tire 1 further includes a carcass 14 extended between the pair of beads 13 and an inner liner 15 placed inward of the carcass 14 in the tire radial direction. The pneumatic tire 1 has excellent performance not only on a dry road surface but also on a wet road surface and snowy and icy road surfaces, and is suitable for an all-season tire.

In the present embodiment, the mounting direction of the pneumatic tire 1 to a vehicle is not specified, and the pneumatic tire is a point-symmetrical tire in which a tread pattern and the shape of a tire side surface remain unchanged regardless if the direction in which the tire is mounted to the vehicle. That is, the tread pattern and the shape of the tire side surface of the pneumatic tire 1 are formed in such a manner that they are rotated 180 degrees on either side of the tire equator CL. Here, the tire equator CL is a virtual line along a tire circumferential direction and passing through a middle portion of the tread 10 in the tire axial direction.

The tread 10 includes a pair of center main grooves 21 and 22 extending along the tire circumferential direction, and a pair of shoulder main grooves 23 and 24 provided outward of the center main grooves 21 and 22 in the tire axial direction, the shoulder main grooves extending along the tire circumferential direction. The four main grooves are formed straight along the tire circumferential direction, without bending in the tire axial direction.

Furthermore, the tread 10 includes a center land portion 30 partitioned by the pair of center main grooves 21 and 22 and formed on the tire equator CL, a first middle land portion 40 partitioned by the center main groove 21 and the shoulder main groove 23, and a second middle land portion 50 partitioned by the center main groove 22 and the shoulder main groove 24. Furthermore, the tread 10 includes a first shoulder land portion 60 placed opposite the first middle land portion 40 via the shoulder main groove 23 in the tire axial direction, and a second shoulder land portion 70 placed opposite the second middle land portion 50 via the shoulder main groove 24 in the tire axial direction. The first shoulder land portion 60 and the second shoulder land portion 70 are formed beyond ground contact ends E1 and E2. The land portion is a portion raised outward from a position corresponding to the bottom of the main groove in the tire radial direction.

Here, the ground contact ends E1 and E2 of the pneumatic tire 1 are defined as opposite ends of a region (ground contact surface) in contact with a flat road surface in the tire axial direction, when an unused tire is mounted on a specified rim and filled with air to reach a specified internal pressure and a predetermined load is applied. The predetermined load is a load of 88% of a specified load.

The "specified rim" refers to a rim defined by the tire standard, a "standard rim" defined by the Japan Automobile Tyre Manufacturers Association Inc. (JATMA), or a "measuring rim" defined by the Tire and Rim Association (TRA) and the European Tyre and Rim Technical Organization (ETRTO). Furthermore, the "specified internal pressure" refers to a "maximum air pressure" defined by JATMA, the maximum value in Table "TIRE LOAD LIMITS AT VARIOUS COLD INFLATION PRESSURES" defined by TRA, or to the "inflation pressure" defined by ETRTO. The specified internal pressure is typically 180 kPa for passenger car tires, and it is 220 kPa for tires labeled "Extra Load" or "Reinforced". The "specified load" refers to a "maximum load capacity" defined by JATMA, the maximum value in Table "TIRE LOAD LIMITS AT VARIOUS COLD INFLATION PRESSURES" defined by TRA, or the "load capacity" defined by ETRTO.

As will be described later in detail, the ground contact surface of the tread 10 of the present embodiment has a comparatively short ground contact length in the vicinity of the ground contact ends E1 and E2 relative to a length (ground contact length) of the ground contact surface on the tire equator CL along the tire circumferential direction, and the shape of the ground contact surface of the tread 10 is close to an elliptical shape. Specifically, the tread 10 is designed so that the ground contact surface has a rectangularity of 0.55 or more, and 0.65 or less.

The sidewalls 11 are arranged on opposite sides of the tread 10 and are provided in an annular shape along the tire circumferential direction. Each sidewall 11 is a portion that protrudes furthest outward in the tire axial direction in the pneumatic tire 1 and is gently curved to be convex toward an outer side in the tire axial direction. The sidewall 11 has a function of preventing damage to the carcass 14. The sidewall 11 is the most deformable portion when the pneumatic tire 1 performs a cushioning function and is typically made of flexible rubber having fatigue resistance.

The pneumatic tire 1 may include a side rib 12 provided between the ground contact end E1, E2 of the tread 10 and the portion of the sidewall 11 that protrudes furthest outward in the tire axial direction. The side rib 12 protrudes outward in the tire axial direction and is provided in an annular shape along the tire circumferential direction. The portions of the pneumatic tire 1 from the ground contact ends E1 and E2 or from regions close to the ground contact ends E1 and E2, to the left and right side ribs 12, are also referred to as buttress regions.

Furthermore, the sidewall 11 is generally provided with letters, numbers, symbols, and the like referred to as serial information. The serial information includes, for example, a size code, a manufacturing date (manufacturing year/week), and a manufacturing location (manufacturing plant code).

The bead 13 is a portion placed inward of the sidewall 11 in the tire radial direction and fixed to a rim of a wheel. The bead 13 includes a bead core 16 and a bead filler 17. The bead core 16 is an annular member composed of a steel bead wire and extending over the entire circumference in the tire circumferential direction and is embedded in the bead 13. The bead filler 17 is an annular hard rubber member with a tapered tip shape that extends outward in the tire radial direction, the rubber member extending over the entire circumference in the tire circumferential direction.

The carcass 14 is extended between a pair of beads 13 and secured by being folded around the bead core 16. The carcass 14 includes a carcass cord made of organic fibers and a topping rubber. The carcass cord is placed at substantially right angles to the tire circumferential direction (e.g., 80° or more, and 90° or less). Examples of the organic fibers for use in the carcass cord include polyester fibers, rayon fibers, aramid fibers, and nylon fibers.

The inner liner 15 covers an inner surface of the tire between the pair of beads 13. The inner liner 15 is composed of air permeation resistant rubber and has a function of maintaining the air pressure of the pneumatic tire 1.

Furthermore, the pneumatic tire 1 further includes a belt 18 disposed outward of the carcass 14 in the tire radial direction and a cap ply 19 covering the outer side of the belt 18 in the tire radial direction. The cap ply 19 has a function of reinforcing the belt 18. The number of cap plies 19 may be one or two, or two or more.

The belt 18 is placed outward of a top portion of the carcass 14 in the tire radial direction and is superimposed on the outer peripheral surface of the carcass 14. The belt 18 is formed of a belt ply made by coating, with a rubber, cords arranged in a direction inclined relative to the tire circumferential direction. The material of the belt ply cord is not particularly limited, and examples thereof include organic fibers such as polyester, rayon, nylon, and aramid, and metals such as steel.

In the present embodiment, the belt 18 includes two belt plies 18A and 18B. The cords constituting the two belt plies 18A and 18B are arranged to intersect each other between the two belt plies 18A and 18B.

Here, the cords constituting the two belt plies 18A and 18B preferably have an angle (belt angle) of 22° or more, and 26° or less, to the tire circumferential direction. When the cord angle to the tire circumferential direction falls within the above range, a constraint force acting on the outer side of the belt 18 in the tire axial direction increases, so that the shape of the ground contact surface of the tread 10 becomes curved, allowing the rectangularity of the ground contact surface of the tread 10 to be reliably controlled within a range of 0.55 to 0.65.

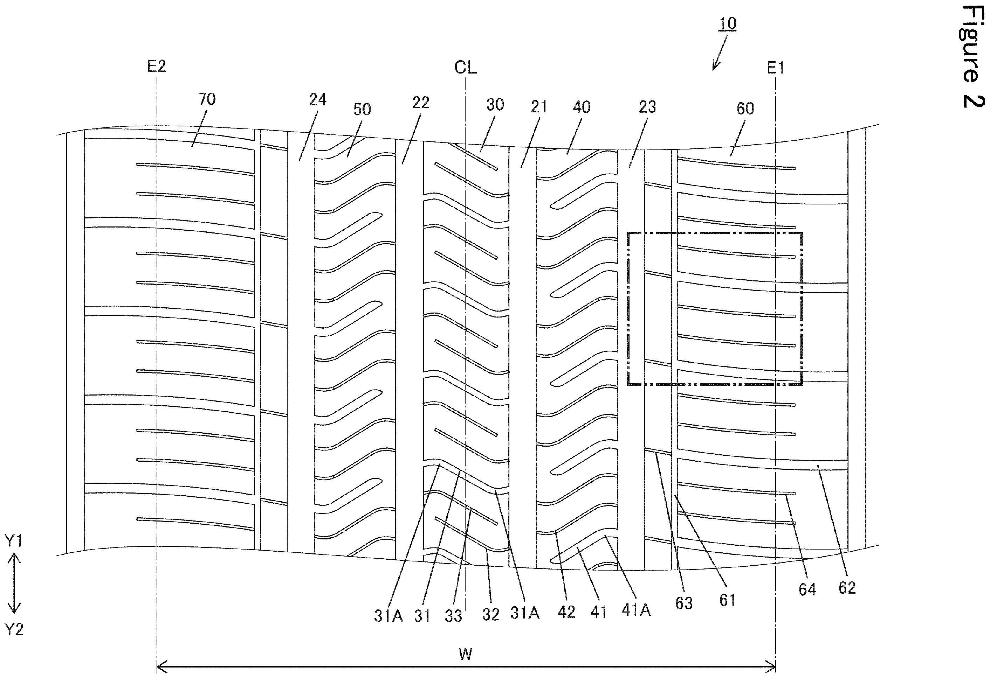

Next, with reference to FIG. 2, the tread pattern of the pneumatic tire 1 will be described. FIG. 2 is a plan view of the pneumatic tire 1 (tread 10).

The tread 10 includes the pair of center main grooves 21 and 22 and the pair of shoulder main grooves 23 and 24 formed outward of the center main grooves 21 and 22 in the tire axial direction. The center main groove 21 and the shoulder main groove 23 are formed in a region on a ground contact end E1 side of the tire equator CL, and the center main groove 22 and the shoulder main groove 24 are formed in a region on a ground contact end E2 side of the tire equator CL. In the present embodiment, the center main grooves 21 and 22 have the same shape, and the shoulder main grooves 23 and 24 have the same shape. The number of the main grooves is not limited to four, and may be three or less, or five or more.

The center main grooves 21 and 22 and the shoulder main grooves 23 and 24 are formed straight along the tire circumferential direction without bending in the tire axial direction. In this case, water on the road surface is likely to enter interiors of the center main grooves 21 and 22 and the shoulder main grooves 23 and 24, and drainage performance can be improved.

In the present embodiment, the shoulder main grooves 23 and 24 have a width smaller than that of the center main grooves 21 and 22. Since the shoulder main grooves 23 and 24 are arranged outward of the center main grooves 21 and 22 in the tire axial direction, the shape of the shoulder main grooves 23 and 24 significantly influences noise during travel. Therefore, reducing the width of the shoulder main grooves 23 and 24 compared to the center main grooves 21 and 22 reduces the volume of the shoulder main grooves 23 and 24 and reduces air column resonance sound caused by the shoulder main grooves 23 and 24. As a result, noise performance can be improved.

The width of each of the shoulder main grooves 23 and 24 is preferably 6% or less and more preferably 5% or less of a length W (hereinafter referred to as "ground contact width W") along the tire axial direction from the ground contact end E1 to the ground contact end E2. When the width of each of the shoulder main grooves 23 and 24 is 6% or less of the ground contact width W, the air column resonance sound caused by the shoulder main grooves 23 and 24 can be further reduced, and the noise performance can be further improved. A lower limit of the width of each of the shoulder main grooves 23 and 24 is, for example, 3% of the ground contact width W. When the width of each of the shoulder main grooves 23 and 24 is 3% or more of the ground contact width W, snow or water is likely to enter the shoulder main grooves 23 and 24, and on-snow performance and drainage performance can be improved. In the present description, the width of the groove refers to the width on a profile surface along the ground contact surface of the tread 10 unless otherwise specified.

A sum of widths of four main grooves is, for example, 12% or more of the ground contact width W, and preferably 15% or more. In this case, for example, the on-snow performance and drainage performance can be improved. Furthermore, the sum of the widths of the four main grooves is, for example, 25% or less of the ground contact width W, and preferably 22% or less. In this case, the air column resonance sound caused by the main grooves can be reduced, and the noise performance can be improved. Therefore, the sum of the widths of the four main grooves is, for example, 12% or more, and 25% or less of the ground contact width W, and preferably 15% or more, and 22% or less.

In the present embodiment, the shoulder main grooves 23 and 24 are formed to have a smaller depth than the center main grooves 21 and 22. Therefore, the shoulder main grooves 23 and 24 are formed to have a smaller groove cross-sectional area than the center main grooves 21 and 22. As described above, the shape of the shoulder main grooves 23 and 24 significantly influences noise during travel. Therefore, reducing the depth of the shoulder main grooves 23 and 24 compared to the center main grooves 21 and 22 reduces the volume of the shoulder main grooves 23 and 24 and reduces the air column resonance sound caused by the shoulder main grooves 23 and 24. As a result, the noise performance can be improved.

The depth of the center main grooves 21 and 22 is, for example, 7 mm or more, and 10 mm or less, and the depth of the shoulder main grooves 23 and 24 is, for example, 6 mm or more, and 9 mm or less. In the present description, the groove depth refers to a length along the tire radial direction from the profile surface along the ground contact surface of the tread 10 to the deepest portion of the groove unless otherwise specified.

The tread 10 includes the center land portion 30 partitioned by the center main grooves 21 and 22, the first middle land portion 40 partitioned by the center main groove 21 and the shoulder main groove 23, and the second middle land portion 50 partitioned by the center main groove 22 and the shoulder main groove 24. Furthermore, the tread 10 includes the first shoulder land portion 60 placed opposite the first middle land portion 40 via the shoulder main groove 23 in the tire axial direction, and the second shoulder land portion 70 placed opposite the second middle land portion 50 via the shoulder main groove 24 in the tire axial direction. The center land portion 30, the first middle land portion 40, the second middle land portion 50, the first shoulder land portion 60, and the second shoulder land portion 70 are formed continuously in the tire circumferential direction.

As described above, the mounting direction of the pneumatic tire 1 to the vehicle is not specified, and the pneumatic tire is a point-symmetrical tire in which the tread pattern and the shape of the tire side surface remain unchanged regardless of the direction in which the pneumatic tire is mounted to the vehicle. Therefore, the shape of the second middle land portion 50 is the same as the shape of first middle land portion 40 rotated about any point on the tire equator CL, and the shape of the second shoulder land portion 70 is the same as the shape of the first shoulder land portion 60 rotated about any point on the tire equator CL. Therefore, in the following, the center land portion 30, the first middle land portion 40 and the first shoulder land portion 60 will be described, and the description of the second middle land portion 50 and the second shoulder land portion 70 will be omitted. In the following, as shown in FIG. 2, a first direction in the tire circumferential direction may be referred to as "Y1 direction" and a second direction may be referred to as "Y2 direction".

### [Center Land Portion 30]

The center land portion 30 is formed on the tire equator CL. In the present embodiment, a middle portion of the center land portion 30 in the tire axial direction is placed on the tire equator CL. A width of the center land portion 30 is, for example, 5% or more, and 30% or less of the ground contact width W.

In the center land portion 30, center slits 31 communicating with the center main grooves 21 and 22, respectively, are formed at intervals in the tire circumferential direction. The center slits 31 have a substantially uniform width, for example, over a length direction. In the present description, the slit refers to a groove with a width of 1.5 mm or more. The width of the center slit 31 is, for example, 2 mm or more, and 5 mm or less.

The center slit 31 has a substantially S-shape in planar view of the center land portion 30. Specifically, the center slit 31 includes bent portions 31A each bent to protrude on one side, in the tire circumferential direction, of the position of each of opposite ends of the center slit 31 in the tire circumferential direction in planar view of the center land portion 30. When the center slit 31 has the bent portion 31A, a groove volume can be readily secured, and the on-snow performance is improved. In the present embodiment, the bent portions 31A are formed on opposite sides of the center slit 31 in the length direction.

An end portion of the center slit 31 on a center main groove 21 side of the center slit 31 overlaps a position of a middle slit 41 described later, formed in the first middle land portion 40 and extended to the center main groove 21 in the tire circumferential direction. In this case, pattern noise can be reduced, and the noise performance is improved.

In the center land portion 30, center sipes 32 and 33 are formed. The center sipe 32 communicates with the center main groove 21, is formed inside the center land portion 30, and does not communicate with the center main groove 22. In contrast, the center sipe 33 communicates with the center main groove 22, is formed inside the center land portion 30, and does not communicate with the center main groove 21. The center sipes 32 and 33 communicate with only one of the main grooves to ensure the rigidity of the center land portion 30 and to readily improve, for example, steering stability. In the present description, the sipe refers to a groove with a width of less than 1.5 mm.

Each of the center sipes 32 and 33 is formed between two center slits 31 that are adjacent to each other in the tire circumferential direction. That is, slits and sipes are formed repeatedly in the order of the center slit 31, center sipe 32, and center sipe 33 along the Y1 direction in the tire circumferential direction.

In the present embodiment, the center sipe 32 extends along a direction inclined on one side in the tire circumferential direction (Y1 direction side in FIG. 2) relative to the tire axial direction, excluding the vicinity of a portion of the center sipe 32 that communicates with the center main groove 21. Furthermore, the center sipe 33 extends along a direction inclined on the other side in the tire circumferential direction (Y2 direction side in FIG. 2) relative to the tire axial direction, excluding the vicinity of a portion of the center sipe 33 that communicates with the center main groove 22. Then, an end of the center sipe 32 on a center main groove 22 side and an end of the center sipe 33 on a center main groove 21 side are arranged at a position that overlaps the ends in the tire circumferential direction.

An inclination angle of the center sipe 32 to the tire axial direction is the same as an inclination angle of the center sipe 33 to the tire axial direction. The inclination angles of the center sipes 32 and 33 to the tire axial direction is, for example, 10° or more, and 70° or less, or may be 20° or more, and 60° or less.

The center sipes 32 and 33 have the same length in the tire axial direction. The length of the center sipes 32 and 33 in the tire axial direction is, for example, 50% or more, and 90% or less, of the width of the center land portion 30. In the present description, the length of the sipe (including the groove) in the tire axial direction refers to the length of the sipe (groove) along the tire axial direction between opposite ends of the sipe in the tire axial direction.

### [First Middle Land Portion 40]

The first middle land portion 40 is placed opposite the center land portion 30 via the center main groove 21 in the tire axial direction and placed opposite the first shoulder land portion 60 via the shoulder main groove 23 in the tire axial direction. A width of the first middle land portion 40 is, for example, 5% or more, and 30% or less, of the ground contact width W. In the present embodiment, the width of the first middle land portion 40 is smaller than the width of the center land portion 30.

In the first middle land portion 40, middle slits 41 are formed at intervals in the tire circumferential direction. Each middle slit 41 communicates with the shoulder main groove 23 and is formed inside the first middle land portion 40 and does not communicate with the center main groove 21. The middle slit 41 has a substantially uniform width, for example, over the length direction. The width of the middle slit 41 is, for example, 2 mm or more, and 5 mm or less.

The middle slit 41 extends along a direction inclined along the Y2 direction to the tire axial direction, excluding the vicinity of a portion of the middle slit 41 that communicates with the shoulder main groove 23. An inclination angle of the middle slit 41 to the tire axial direction is, for example, 10° or more, and 70° or less, or may be 20° or more, and 60° or less. In the present embodiment, the inclination angle of the middle slit 41 to the tire axial direction is substantially the same as the inclination angle of the center sipes 32 and 33 to the tire axial direction, the center sipes 32 and 33 being formed in the center land portion 30.

As described above, the middle slit 41 does not communicate with the center main groove 21. Consequently, the rigidity of the first middle land portion 40 on an inner side in the tire axial direction improves. As a result, for example, steering stability improves. The length of the first middle land portion 40 in the tire axial direction is, for example, 50% or more, and 90% or less, of the width of the first middle land portion 40.

An end portion of the middle slit 41 on a shoulder main groove 23 side (outer side in the tire axial direction) is located opposite a communication sipe 63 described later via the shoulder main groove 23. In this case, the pattern noise can be reduced, and the noise performance is improved.

The middle slit 41 has a bent portion 41A bent to protrude on one side, in the tire circumferential direction, of positions of opposite ends of the middle slit 41 in the tire circumferential direction in planar view of the first middle land portion 40. When the middle slit 41 has the bent portion 41A, the groove volume can be readily secured, and the on-snow performance is improved.

In the first middle land portion 40, a middle sipe 42 is formed to communicate with each of the center main groove 21 and the shoulder main groove 23. Two middle sipes 42 are formed between two middle slits 41 that are adjacent to each other in the tire circumferential direction. That is, slits and sipes are formed repeatedly in the order of the middle slit 41, middle sipe 42, and middle sipe 42 along the Y1 direction in the tire circumferential direction.

The middle sipe 42 has a substantial S-shape in planar view of the first middle land portion 40 in the same manner as the center slit 31. Specifically, the middle sipe 42 has a bent portion bent to protrude on one side in the tire circumferential direction of positions of opposite ends of the middle sipe 42 in the tire circumferential direction in planar view of the first middle land portion 40. When the middle sipe 42 has the above shape, strain applied to the middle sipe 42 during travel is distributed, and ground contact pressure of the first middle land portion 40 is distributed. As a result, for example, the steering stability improves. In the present embodiment, the bent portions are formed on opposite sides, respectively, of the middle sipe 42 in the length direction.

### [First Shoulder Land Portion 60]

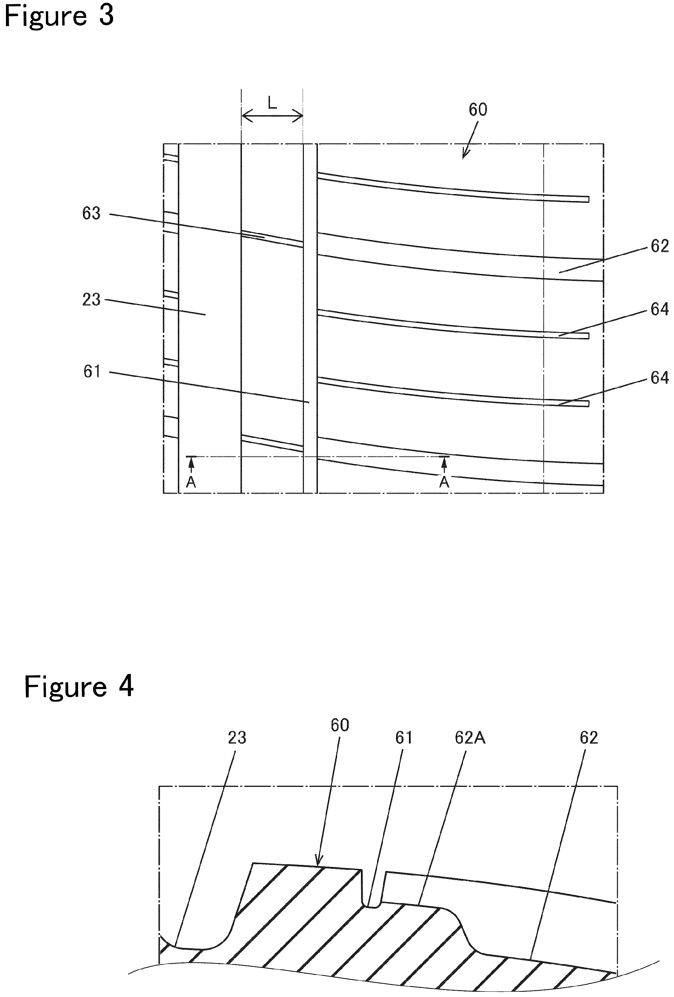

Next, with further reference to FIG. 3, the first shoulder land portion 60 will be described. FIG. 3 is an enlarged view of the vicinity of the first shoulder land portion 60 in FIG. 2.

As shown in FIGS. 2 and 3, the first shoulder land portion 60 is located opposite the first middle land portion 40 via the shoulder main groove 23 in the tire axial direction. A width of the ground contact surface of the first shoulder land portion 60 is, for example, 10% or more, and 30% or less, of the ground contact width W.

The first shoulder land portion 60 includes a shoulder sub groove 61 extending along the tire circumferential direction and having a width smaller than a width of the shoulder main groove 23, and a shoulder slit 62 extending outward from the shoulder sub groove 61 in the tire axial direction. Furthermore, the first shoulder land portion 60 includes a communication sipe 63 formed opposite the shoulder slit 62 via the shoulder sub groove 61, the communication sipe 63 communicating with the shoulder main groove 23.

The shape of the shoulder slit 62 significantly influences pattern noise generated when the tread 10 contacts the road surface. Specifically, as the volume of the shoulder slit 62 in contact with the road surface increases, the pattern noise increases, and noise performance degrades. If the shoulder slit 62 does not communicate with the shoulder main groove 23 as in the present embodiment, the length of the shoulder slit 62 in the tire axial direction is shorter. As a result, the volume of the shoulder slit 62 in contact with the road surface can be reduced, and the pattern noise can be reduced.

In contrast, when the shoulder slit 62 in the tire axial direction is shortened and the volume of the shoulder slit 62 is reduced during travel on the snow-covered road surface, it becomes harder for snow to enter the shoulder slit 62, and snow column shear force to grasp and compact snow decreases, resulting in degraded on-snow performance.

Therefore, as in the present embodiment, providing the first shoulder land portion 60 with the shoulder sub groove 61 extending along the tire circumferential direction allows the shoulder sub groove 61 to grasp and compact snow during travel on the snow-covered road surface. Consequently, the snow column shear force increases, and the on-snow performance improves.

The shoulder sub groove 61 extends in the tire circumferential direction and has a uniform width over the entire circumference. The width of the shoulder sub groove 61 is preferably 0.7% or more of the ground contact width W of the tread 10, and more preferably 0.8% or more. Setting the width of the shoulder sub groove 61 to 0.7% or more of the ground contact width W of the tread 10 can further increase the snow column shear force and further improve the on-snow performance. Furthermore, the width of the shoulder sub groove 61 is preferably 2.0% or less of the ground contact width W of the tread 10, and more preferably 1.8% or less. Setting the width of the shoulder sub groove 61 to 2.0% or less of the ground contact width W of the tread 10 can reduce the pattern noise caused by the shoulder sub groove 61 and ensure the noise performance. Therefore, the width of the shoulder sub groove 61 is preferably 0.7% or more, and 2.0% or less, of the ground contact width W of the tread 10, and more preferably 0.8% or more, and 1.8% or less.

The shoulder sub groove 61 is formed at a position away by a predetermined length from an inner end of the first shoulder land portion 60 in the tire axial direction to the outer side in the tire axial direction. Specifically, a width (L, see FIG. 3) of a region of the first shoulder land portion 60 partitioned by the shoulder main groove 23 and the shoulder sub groove 61 is preferably 4% or more, and 8% or less, of the ground contact width W of the tread 10, and more preferably 5% or more, and 7% or less, of the ground contact width W of the tread 10. Setting the width (L) of the region to the above range can control the length of the shoulder slit 62 in the tire axial direction within a predetermined range and can further improve the noise performance and on-snow performance. In other words, when the width (L) of the region is less than 4% of the ground contact width W of the tread 10, the length of the shoulder slit 62 in the tire axial direction increases, and pattern noise is likely to occur. Furthermore, when the width (L) of the region exceeds 8% of the ground contact width W of the tread 10, the shoulder slit 62 excessively shortens in the tire axial direction, the snow column shear force generated in the shoulder slit 62 may decrease, and the on-snow performance may degrade.

The depth of the shoulder sub groove 61 is smaller than the depth of the shoulder main groove 23 and is, for example, 2 mm or more, and 6 mm or less. When the depth of the shoulder sub groove 61 is in the above range, the on-snow performance can be further improved while ensuring the noise performance.

Shoulder slits 62 extending outward from the shoulder sub groove 61 in the tire axial direction are formed at intervals in the tire circumferential direction. The shoulder slits 62 are formed outward in the tire axial direction beyond the ground contact end E1. The shoulder slits 62 have, for example, a substantially uniform groove width over the length direction. The width of each shoulder slit 62 may be larger than a width of each of the center slit 31 and the middle slit 41 and is, for example, 2.5 mm or more, and 6 mm or less.

The depth of the shoulder slit 62 is preferably larger than the depth of the shoulder sub groove 61, excluding a raised portion 62A described later. The depth of the shoulder slit 62 is, for example, 4 mm or more, and 9 mm or less. When the depth of the shoulder slit 62 is in the above range, the noise performance and on-snow performance can be further improved.

Furthermore, since the shoulder slit 62 communicates with the shoulder sub groove 61, air in the groove is likely to flow outward in the tire axial direction. As a result, the pattern noise is reduced and the noise performance is further improved.

FIG. 4 is a cross-sectional view taken along line A-A of FIG. 3 and is a view showing the shape of a groove bottom of the shoulder slit 62. As shown in FIG. 4, the shoulder slit 62 may include the raised portion 62A with the groove bottom raised outward in the tire radial direction, in the vicinity of a portion of the shoulder slit 62 that communicates with the shoulder sub groove 61. Providing the raised portion 62A improves the rigidity of the first shoulder land portion 60. As a result, for example, the steering stability can be improved. The length of the raised portion 62A in the tire axial direction is, for example, 3% or more, and 20% or less, of the width of the ground contact surface of the first shoulder land portion 60 and may be 5% or more, and 10% or less. Furthermore, the depth of the shoulder slit 62 in the raised portion 62A is, for example, 2 mm or more, and 6 mm or less. Note that the shoulder slit 62 may not have the raised portion 62A.

As shown in FIG. 3, the communication sipe 63 is located opposite the shoulder slit 62 via the shoulder sub groove 61 and communicates with the shoulder sub groove 61 and the shoulder main groove 23. As a result of the examination by the present inventors, it has been found that providing the communication sipe 63 at a position opposite the shoulder slit 62 via the shoulder sub groove 61 can reduce the pattern noise and improve the noise performance.

The communication sipe 63 has, for example, a substantially uniform width over the length direction. The width of the communication sipe 63 is, for example, 0.5 mm or more, and 1.0 mm or less. Furthermore, the depth of the communication sipe 63 is, for example, 2 mm or more, and 8 mm or less. In the present embodiment, communication sipes 63 are provided at positions opposite all the shoulder slits 62 via the shoulder sub groove 61.

Furthermore, the first shoulder land portion 60 includes shoulder sipes 64 formed to extend outward from the shoulder sub groove 61 in the tire axial direction. Two shoulder sipes 64 are formed between two shoulder slits 62 that are adjacent to each other in the tire circumferential direction. That is, slits and sipes are formed repeatedly in the order of the shoulder slit 62, shoulder sipe 64, and shoulder sipe 64 along the Y1 direction in the tire circumferential direction. Each shoulder sipe 64 is formed beyond the ground contact end E1 toward the outer side in the tire axial direction and is formed shorter than the shoulder slit 62. Providing the shoulder sipes 64 increases a grip force with the road surface during travel on the snow-covered surface and improves the on-snow performance.

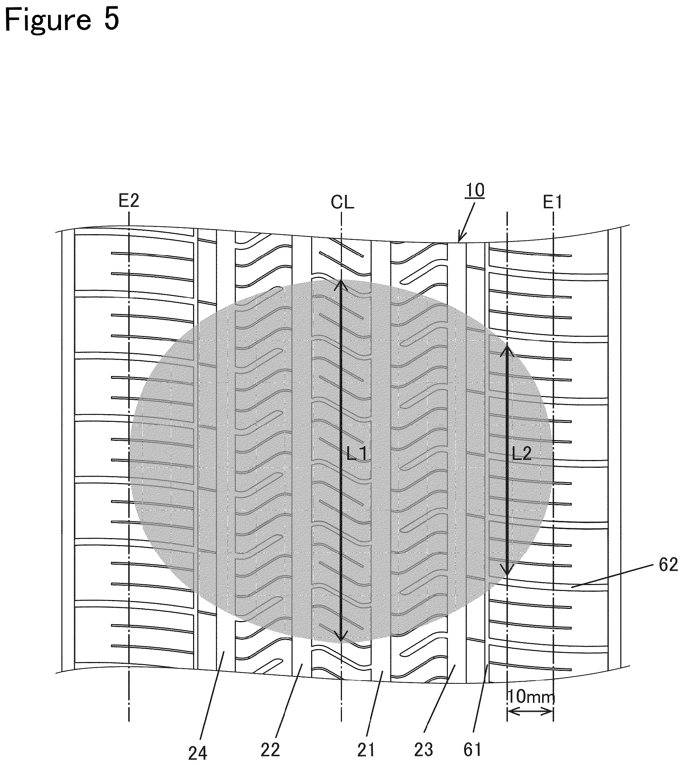

Next, with reference to FIG. 5, the shape of the ground contact surface of the tread 10 will be described in detail. FIG. 5 is a view schematically showing the shape of the ground contact surface of the tread 10.

As shown in FIG. 5, the ground contact surface of the tread 10 of the present embodiment has a comparatively short ground contact length (L2) in the vicinity of the ground contact end compared to the ground contact length (L1) on the tire equator CL, the ground contact surface having a shape close to an elliptical shape. Here, the ground contact length (L1) refers to a length along the tire circumferential direction on the tire equator CL of the ground contact surface, when an unused pneumatic tire is mounted to a specified rim, a tire internal pressure is set to 240 kPa, and a load is set to 510 kgf. The ground contact length (L2) is a length of the ground contact surface along the tire circumferential direction at a position of 10 mm inside the tire axial direction from opposite ends of the ground contact surface in the tire axial direction, obtained under the above measurement conditions.

In the present description, L2/L1 is defined as the rectangularity of the ground contact surface of the tread 10. In the present embodiment, the ground contact length (L2) is substantially the same length on the left and right sides of the tread 10. As described above, as the rectangularity decreases, the shape of the ground contact surface of the tread 10 is closer to the elliptical shape. Therefore, as the rectangularity decreases, the frequency of the air column resonance sound generated in the center main grooves 21 and 22 and the shoulder main grooves 23 and 24 is distributed. As a result, the noise caused by the air column resonance sound is reduced, and the noise performance is improved.

Furthermore, as the rectangularity decreases, the ground contact surface on the outer side in the tire axial direction reduces, so that when the tread 10 contacts the road surface, the volume of the shoulder slit 62 that contacts the road surface decreases. As a result, the pattern noise can be reduced. Also, as the rectangularity decreases, the ground contact pressure is more likely to be distributed. Therefore, striking noise is reduced when the tread 10 hits the road surface, and the noise performance is improved.

In addition, during travel, water on the road surface tends to be dispersed laterally along the contour of the ground contact surface of the tread 10. Therefore, as the rectangularity decreases, the water on the road surface is more easily dispersed laterally, thereby improving drainage performance.

In contrast, if the rectangularity decreases, it is harder for snow to enter the main groove or slit, and the on-snow performance is likely to degrade. However, in the present embodiment, as described above, the shoulder sub groove 61 is formed on the shoulder land portion. Consequently, even when the rectangularity decreases, the shoulder sub groove 61 can grip the snow, and the on-snow performance is ensured.

To improve the noise performance while ensuring the on-snow performance, the rectangularity of the ground contact surface of the tread 10 is preferably 0.55 or more, and 0.65 or less, and more preferably 0.57 or more, and 0.63 or less. The rectangularity of the ground contact surface of the tread 10 can be controlled, for example, by the angle (belt angle) of the cords of the belt plies 18A and 18B constituting the belt 18 with respect to the tire circumferential direction. As the belt angle increases, the constraint force acting on the outer side in the tire axial direction increases, and the rectangularity decreases. A method for controlling the rectangularity of the ground contact surface of the tread 10 is not limited to changing the belt angle, and the controlling may include, for example, changing arrangement or the like of the cap ply 19 or an edge ply (not shown) that reinforces the belt 18.

The above embodiment can be appropriately changed if the object of the present invention is not changed. For example, in the above embodiment, the shape of the second middle land portion 50 is the same as the shape of the first middle land portion 40 rotated about any point on the tire equator CL, and the shape of the second shoulder land portion 70 is the same as the shape of the first shoulder land portion 60 rotated about any point on the tire equator CL, but the present invention is not limited thereto. That is, the tread 10 may have different tread patterns on the left and right sides of the tire equator CL.

Furthermore, grooves other than the shoulder sub groove 61, the shoulder slit 62, the communication sipe 63, and the shoulder sipe 64 may be formed in the first shoulder land portion 60 and the second shoulder land portion 70.

### REFERENCE SIGNS LIST

- 1: pneumatic tire
- 10: tread
- 11: sidewall
- 12: side rib
- 13: bead
- 14: carcass
- 15: inner liner
- 16: bead core
- 17: bead filler
- 18: belt
- 18A, 18B: belt ply
- 19: cap ply
- 21, 22: center main groove
- 23, 24: shoulder main groove
- 30: center land portion
- 31: center slit
- 31A: bent portion
- 32, 33: center sipe
- 40: first middle land portion
- 41: middle slit
- 41A: bent portion
- 42: middle sipe
- 50: second middle land portion
- 60: first shoulder land portion
- 61: shoulder sub groove
- 62: shoulder slit
- 62A: raised portion
- 63: communication sipe
- 64: shoulder sipe
- 70: second shoulder land portion
- CL: tire equator
- E1, E2: ground contact end

## Claims

1. A pneumatic tire (1) comprising a tread (10),
the tread (10) including:
a pair of shoulder main grooves (23); and
a shoulder land portion (60) placed outward of each of the shoulder main grooves (23) in a tire axial direction, wherein the shoulder land portion (60) includes:
a shoulder sub groove (61) extending along a tire circumferential direction and having a width smaller than a width of the shoulder main groove (23), and
a shoulder slit (62) extending outward from the shoulder sub groove (61) in the tire axial direction.

2. The pneumatic tire (1) according to claim 1, wherein the shoulder land portion (60) includes a sipe (63) located opposite the shoulder slit (62) via the shoulder sub groove (61), the sipe (63) communicating with the shoulder main groove (23).

3. The pneumatic tire (1) according to claim 1 or 2, wherein the width of the shoulder sub groove (61) is 0.7% or more, and 2% or less, of a ground contact width of the tread (10).

4. The pneumatic tire (1) according to any one of claims 1 to 3, wherein a width of a region of the shoulder land portion (60) that is partitioned by the shoulder main groove (23) and the shoulder sub groove (61) is 4% or more, and 8% or less, of a ground contact width of the tread.

5. The pneumatic tire (1) according to any one of claims 1 to 4, wherein the shoulder slit (61) includes a raised portion (62A) with a groove bottom raised outward in a tire radial direction, in the vicinity of a portion of the shoulder slit (62) that communicates with the shoulder sub groove (61).

6. The pneumatic tire (1) according to any one of claims 1 to 5, wherein the width of the shoulder main groove (23) is 6% or less of a ground contact width of the tread.

7. The pneumatic tire (1) according to any one of claims 1 to 6, wherein the tread further includes:
a pair of center main grooves (21,22) placed inward of the shoulder main groove (23,24) in the tire axial direction;
a center land portion (30) partitioned by the pair of center main grooves (21,22); and
a pair of middle land portions (40,50) partitioned by the center main groove (21,22) and the shoulder main groove (23,24).

8. The pneumatic tire (1) according to claim 7, wherein the shoulder land portion (60) includes a sipe(63) located opposite the shoulder slit via the shoulder sub groove (61), the sipe communicating with the shoulder main groove (23), and
each of the middle land portions (40) includes a middle slit located opposite the sipe via the shoulder main groove (23), the middle slit (41) extending inward in the tire axial direction.

9. The pneumatic tire (1) according to claim 8, wherein the middle slit (41) includes a bent portion (41A) bent to protrude on one side, in the tire circumferential direction, of positions of opposite ends of the middle slit (41) in the tire circumferential direction in planar view of the middle land portion (40).

10. The pneumatic tire (1) according to any one of claims 1 to 9, further comprising:
a carcass; and
a belt (18) including at least one or more belt plies placed outward of the carcass in a tire radial direction, the belt ply including a cord disposed to be inclined in the tire circumferential direction, wherein an angle of the cord to the tire circumferential direction is 22° or more, and 26° or less.

11. The pneumatic tire (1) according to any one of claims 1 to 10, wherein a rectangularity of a ground contact surface of the tread (10) is 0.55 or more, and 0.65 or less.

12. The pneumatic tire (1) according to claim 8, wherein the middle slit (41) does not communicate with the center main groove (21,22).

13. The pneumatic tire (1) according to claim 8, wherein the middle land portion (40) includes a middle sipe (42) formed to communicate with each of the center main groove (21) and the shoulder main groove (23), and
two of the middle sipes (42) are formed between two of the middle slits (41) that are adjacent to each other in the tire circumferential direction.

14. The pneumatic tire (1) according to claim 7, wherein a groove cross-sectional area of the shoulder main groove (23) is smaller than a groove cross-sectional area of the center main groove (21).

15. The pneumatic tire (1) according to any one of claims 1 to 14, wherein the width of the shoulder main groove (23,24) is 3% or more, and 6% or less, of a ground contact width of the tread.
